(19) Europäisches Patentamt
European Patent Office
Office européen des brevets

(11) **EP 4 202 637 A1**

(12) **EUROPEAN PATENT APPLICATION**

(43) Date of publication:
**28.06.2023  Bulletin 2023/26**

(21) Application number: **22184596.9**

(22) Date of filing: **13.07.2022**

(51) International Patent Classification (IPC):
**G06F 7/483** (2006.01)   **G06F 30/398** (2020.01)

(52) Cooperative Patent Classification (CPC):
**G06F 7/483; G06F 30/27; G06F 30/33**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.12.2021  CN 202111571211**

(71) Applicant: **BEIJING BAIDU NETCOM SCIENCE AND TECHNOLOGY CO. LTD.**
**100085 Beijing (CN)**

(72) Inventor: **LI, Yan**
**Beijing, 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **INTEGRATED CIRCUIT CHIP VERIFICATION METHOD AND APPARATUS, ELECTRONIC DEVICE, AND STORAGE MEDIUM**

(57)    The present disclosure provides an integrated circuit (IC) chip verification method and apparatus, an electronic device, and a storage medium, and relates to the field of artificial intelligence such as artificial intelligence chips and cloud computing. The method may include: acquiring a first parameter and a second parameter, the first parameter being an upper limit of a required floating-point number, and the second parameter being a lower limit of the required floating-point number; generating a first sign, a first exponent, and a first fraction of a randomized floating-point number respectively according to the first parameter and the second parameter; generating the floating-point number according to the first sign, the first exponent, and the first fraction; and performing IC chip verification by using the floating-point number. By use of the solution of the present disclosure, randomization of floating-point data can be realized, thereby providing required floating-point data excitation for the verification of relevant operation units in IC chip verification.

FIG. 1

## Description

### Field of the Disclosure

The present disclosure relates to the field of artificial intelligence technologies, and in particular, to an integrated circuit (IC) chip verification method and apparatus, an electronic device, and a storage medium in fields such as artificial intelligence chips and cloud computing.

### Background of the Disclosure

Randomized data excitation is very important for verification of IC chips, which may be voice chips or the like.

At present, mainstream IC verification platforms are generally built based on system verilog. The system verilog refers to an SV language, which is a hardware description and verification language. However, a system verilog platform only provides randomization for fixed-point (integer) data, not for floating-point data.

### Summary of the Disclosure

The present disclosure provides an IC chip verification method and apparatus, an electronic device, and a storage medium.

A method for IC chip verification, including:

acquiring a first parameter and a second parameter, the first parameter being an upper limit of a required floating-point number, and the second parameter being a lower limit of the required floating-point number;
generating a first sign, a first exponent, and a first fraction of a randomized floating-point number respectively according to the first parameter and the second parameter;
generating the floating-point number according to the first sign, the first exponent, and the first fraction; and
performing IC chip verification by using the floating-point number.

An apparatus for IC chip verification, including: a parameter acquisition module, a first generation module, a second generation module, and a verification module;

the parameter acquisition module being configured to acquire a first parameter and a second parameter, the first parameter being an upper limit of a required floating-point number, and the second parameter being a lower limit of the required floating-point number;
the first generation module being configured to generate a first sign, a first exponent, and a first fraction of a randomized floating-point number respectively according to the first parameter and the second parameter;
the second generation module being configured to generate the floating-point number according to the first sign, the first exponent, and the first fraction; and
the verification module being configured to perform IC chip verification by using the floating-point number.

An electronic device, including:

at least one processor; and
a memory in communication connection with the at least one processor; wherein
the memory stores instructions executable by the at least one processor, and the instructions are executed by the at least one processor to enable the at least one processor to perform the method as described above.

A non-transitory computer-readable storage medium storing computer instructions, wherein the computer instructions are configured to cause a computer to perform the method as described above.

A computer program product, including computer programs/instructions, wherein, when the computer programs/instructions are executed by a processor, the method as described above is performed.

One embodiment in the present disclosure has the following advantages or beneficial effects. Randomization of floating-point data can be realized, thereby providing required floating-point data excitation for the verification of relevant operation units in IC chip verification and improving a verification effect.

It should be understood that the content described in this part is neither intended to identify key or significant features of the embodiments of the present disclosure, nor intended to limit the scope of the present disclosure. Other features of the present disclosure will be made easier to understand through the following description.

### Brief Description of Drawings

The accompanying drawings are intended to provide a better understanding of the solutions and do not constitute a limitation on the present disclosure. In the drawings,

FIG. 1 is a flowchart of an embodiment of a method for IC chip verification according to the present disclosure;
FIG. 2 is a flowchart of a process of generating a first sign, a first exponent, and a first fraction in a first generation manner according to the present disclosure;
FIG. 3 is a flowchart of a process of generating the first sign, the first exponent, and the first fraction in a second generation manner according to the present disclosure;

FIG. 4 is a flowchart of a process of generating the first sign, the first exponent, and the first fraction in a third generation manner according to the present disclosure;

FIG. 5 is a schematic structural diagram of composition of a first embodiment 500 of an apparatus for IC chip verification according to the present disclosure;

FIG. 6 is a schematic structural diagram of composition of a second embodiment 600 of the apparatus for IC chip verification according to the present disclosure; and

FIG. 7 is a schematic block diagram of an electronic device 700 that may be configured to implement an embodiment of the present disclosure.

**Detailed Description of Preferred Embodiments**

Exemplary embodiments of the present disclosure are illustrated below with reference to the accompanying drawings, which include various details of the present disclosure to facilitate understanding and should be considered only as exemplary. Therefore, those of ordinary skill in the art should be aware that various changes and modifications can be made to the embodiments described herein without departing from the scope and spirit of the present disclosure. Similarly, for clarity and simplicity, descriptions of well-known functions and structures are omitted in the following description.

In addition, it should be understood that the term "and/or" herein is merely an association relationship describing associated objects, indicating that three relationships may exist. For example, A and/or B indicates that there are three cases of A alone, A and B together, and B alone. In addition, the character "/" herein generally means that associated objects before and after it are in an "or" relationship.

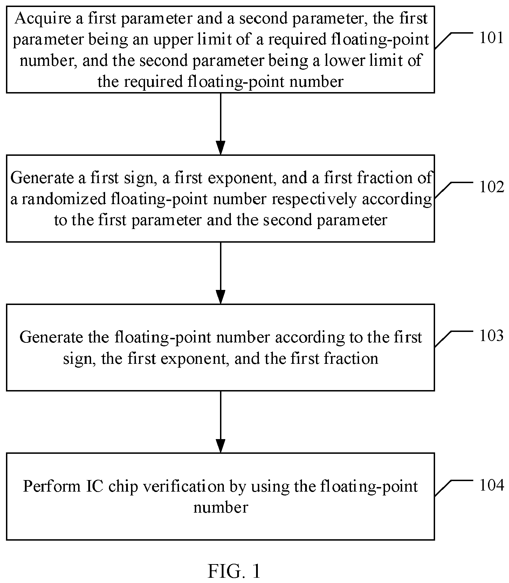

FIG. 1 is a flowchart of an embodiment of a method for IC chip verification according to the present disclosure. As shown in FIG. 1, the following specific implementation steps may be included.

In step 101, a first parameter and a second parameter are acquired, the first parameter being an upper limit of a required floating-point number, and the second parameter being a lower limit of the required floating-point number.

In step 102, a first sign, a first exponent, and a first fraction of a randomized floating-point number are generated respectively according to the first parameter and the second parameter.

In step 103, the floating-point number is generated according to the first sign, the first exponent, and the first fraction.

In step 104, IC chip verification is performed by using the floating-point number.

As can be seen, by use of the solution of the above method embodiment, randomization of floating-point data can be realized, thereby providing required floating-point data excitation for the verification of relevant operation units in IC chip verification and improving a verification effect.

The floating-point data may include a floating-point number and a floating-point number vector. The floating-point number may consist of a sign, an exponent, and a fraction.

In order to be distinguished from other signs, exponents, and fractions that appear later, a sign, an exponent, and a fraction of a randomized floating-point number are referred to as a first sign, a first exponent, and a first fraction respectively. Subsequent similar situations are not described in detail.

In the solution of the present disclosure, an obtained floating-point number is required to be in a data range constrained. That is, a user may set that there is a need to constrain a value range of the floating-point number generated by randomization, and finally return a floating-point number that meets a constraint condition.

Accordingly, a first parameter and a second parameter may be set. The first parameter is an upper limit of a required floating-point number, and the second parameter is a lower limit of the required floating-point number.

In the manner of the present disclosure, a first sign, a first exponent, and a first fraction of a randomized floating-point number may be generated respectively according to the first parameter and the second parameter. In one embodiment of the present disclosure, a second sign, a second exponent, and a second fraction of the first parameter may be acquired respectively, a third sign, a third exponent, and a third fraction of the second parameter may be acquired respectively, and then the first sign, the first exponent, and the first fraction of the floating-point number may be generated according to the second sign, the second exponent, the second fraction, the third sign, the third exponent, and the third fraction acquired.

The second sign, the second exponent, and the second fraction of the first parameter may be denoted by sign_max, exp_max, and frac_max respectively, the third sign, the third exponent, and the third fraction of the second parameter may be denoted by sign min, exp_min, and frac min respectively, and the first sign, the first exponent, and the first fraction of the floating-point number may be denoted by sign_result, exp_result, and frac_result.

In one embodiment of the present disclosure, the first sign, the first exponent, and the first fraction may be generated in a first generation manner if the second sign and the third sign are equal to 0, the first sign, the first exponent, and the first fraction may be generated in a second generation manner if the second sign is equal to 0 and the third sign are equal to 1, and the first sign, the first exponent, and the first fraction may be generated in a third generation manner if the second sign is equal to 1 and the third sign are equal to 1.

In other words, the second sign and the third sign may be compared, and a corresponding generation manner may be used to generate the first sign, the first exponent, and the first fraction according to different comparison results, so that the generation is more targeted, thereby improving accuracy of a generation result.

If sign_max==1 and sign_min==0, indicating that the first parameter has a negative sign and the second parameter has a positive sign, a floating-point number that meets the constraint condition cannot be obtained in this case. Accordingly, report an error and exit. If sign_max==0 and sign_min==0, the first sign, the first exponent, and the first fraction may be generated in the first generation manner. If sign_max==0 and sign_min==1, the first sign, the first exponent, and the first fraction may be generated in the second generation manner. If sign_max==1 and sign_min==1, the first sign, the first exponent, and the first fraction may be generated in the third generation manner.

Specification implementations of the first generation manner, the second generation manner, and the third generation manner are introduced below respectively.

1) First generation manner

In one embodiment of the present disclosure, the generating, by the first generation module, the first sign, the first exponent, and the first fraction in a first generation manner may include: taking 0 as the first sign, the second exponent or the third exponent as the first exponent, and a random value in a range of [the third fraction: the second fraction] as the first fraction if the second exponent is equal to the third exponent and the second fraction is greater than or equal to the third fraction.

In addition, in one embodiment of the present disclosure, the generating, by the first generation module, the first sign, the first exponent, and the first fraction in a first generation manner may further include: generating a random value in a range of [the third exponent: the second exponent] as a first intermediate variable if the second exponent is greater than the third exponent; taking 0 as the first sign, the third exponent as the first exponent, and a random value in a range of [the third fraction: a first predetermined value] as the first fraction if the first intermediate variable is equal to the third exponent; taking 0 as the first sign, the second exponent as the first exponent, and a random value in a range of [a second predetermined value: the second fraction] as the first fraction if the first intermediate variable is equal to the second exponent; and taking 0 as the first sign, the first intermediate variable as the first exponent, and a random value in a range of [the second predetermined value: the first predetermined value] as the first fraction if the first intermediate variable is equal to neither the third exponent nor the second exponent.

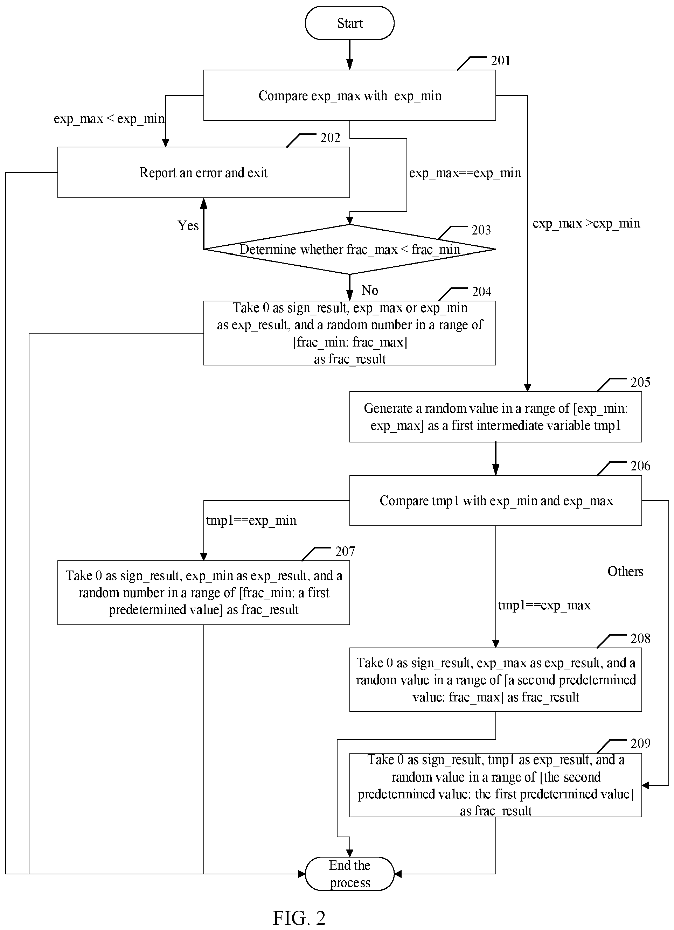

Based on the above introduction, FIG. 2 is a flowchart of a process of generating a first sign, a first exponent, and a first fraction in a first generation manner according to the present disclosure. As shown in FIG. 2, the following specific implementation steps may be included.

In step 201, exp_max is compared with exp_min, if exp max < exp_min, step 202 is performed, if exp_max==exp_min, step 203 is performed, and if exp_max >exp_min, step 205 is performed.

In step 202, report an error and exit, and then end the process.

When sign _max==0 and sign _min==0, indicating that both the first parameter and the second parameter have a positive sign, if exp_max < exp_min, indicating that the exponent of the first parameter is less than that of the second parameter, a floating-point number that meets the constraint condition cannot be obtained in this case. Accordingly, report an error and exit.

In step 203, it is determined whether frac_max < frac_min, if yes, step 202 is performed, and otherwise, step 204 is performed.

When sign_max==0, sign_min==0, and exp_max==exp_min, if frac_max < frac_min, indicating that both the first parameter and the second parameter have a positive sign and the exponent of the first parameter is equal to that of the second parameter, but the fraction of the first parameter is less than that of the second parameter, a floating-point number that meets the constraint condition cannot be obtained in this case. Accordingly, report an error and exit.

In step 204, 0 is taken as sign result, exp_max or exp_min is taken as exp_result, a random value in a range of [frac_min: frac_max] is taken as frac result, and then the process is ended.

That is, sign_result=0;

exp_result=exp_max or exp_min;
frac_result = random([frac_min : frac_max]).

The random value in the range of [frac_min:frac_max] may be generated as frac result by using a randomization method provided by a system verilog platform.

In step 205, a random value in a range of [exp_min: exp_max] is generated as a first intermediate variable tmp1.

The random value in the range of [exp_min : exp_max] may be generated as the first intermediate variable tmp1 by using the randomization method provided by the system verilog platform. That is, tmp1= random([exp_min : exp_max]).

In step 206, tmp1 is compared with exp_min and exp_max, if tmp1==exp_min, step 207 is performed, if tmp1==exp_max, step 208 is performed, and otherwise, step 209 is performed.

In step 207, 0 is taken as sign_result, exp_min is taken as exp_result, a random value in a range of [frac_min: a first predetermined value] is taken as frac result, and then the process is ended.

A specific value of the first predetermined value may be determined according to an actual requirement, for example, 'h7F_FFFF.

Then, sign_result=0;

exp_result=exp_min;
frac_result = random([frac_min : 'h7F_FFFF]).

The random value in the range of [frac_min : 'h7F_FFFF] may be generated as frac result by using the randomization method provided by the system verilog platform.

In step 208, 0 is taken as sign_result, exp_max is taken as exp_result, a random value in a range of [a second predetermined value: frac max] is taken as frac result, and then the process is ended.

A specific value of the second predetermined value may be determined according to an actual requirement, for example, 'h0.

Then, sign_result=0;

exp_result=exp_max;
frac_result = random(['h0 : frac_max]).

The random value in the range of ['h0 : frac_max] may be generated as frac_result by using the randomization method provided by the system verilog platform.

In step 209, 0 is taken as sign result, tmp1 is taken as exp result, a random value in a range of [the second predetermined value: the first predetermined value] is taken as frac result, and then the process is ended.

That is, sign_result=0;

exp_result=tmp1;
frac_result = random(['h0 : 'h7F _FFFF]).

The random value in the range of ['h0 : 'h7F _FFFF] may be generated as frac_result by using the randomization method provided by the system verilog platform.

After the first sign, the first exponent, and the first fraction are acquired, a required floating-point number may be generated according to such information. That is, a randomized floating-point number that meets a constraint condition may be generated according to the acquired sign result, exp result, and frac_result. The generation manner is a related art.

2) Second generation manner

In one embodiment of the present disclosure, the generating, by the first generation module, the first sign, the first exponent, and the first fraction in a second generation manner may include: generating a random value in a range of [0:1] as a second intermediate variable; generating a random value in a range of [0: the second exponent] as a third intermediate variable if the second intermediate variable is equal to 0; taking 0 as the first sign, the second exponent as the first exponent, and a random value in a range of [a second predetermined value: the second fraction] as the first fraction if the third intermediate variable is equal to the second exponent; and taking 0 as the first sign, the third intermediate variable as the first exponent, and a random value in a range of [the second predetermined value: a first predetermined value] as the first fraction if the third intermediate variable is not equal to the second exponent.

In addition, in one embodiment of the present disclosure, the generating, by the first generation module, the first sign, the first exponent, and the first fraction in a second generation manner may further include: generating a random value in a range of [0: the third exponent] as a fourth intermediate variable if the second intermediate variable is not equal to 0; taking 1 as the first sign, the third exponent as the first exponent, and a random value in a range of [a second predetermined value: the third fraction] as the first fraction if the fourth intermediate variable is equal to the third exponent; and taking 1 as the first sign, the fourth intermediate variable as the first exponent, and a random value in a range of [the second predetermined value: the first predetermined value] as the first fraction if the fourth intermediate variable is not equal to the third exponent.

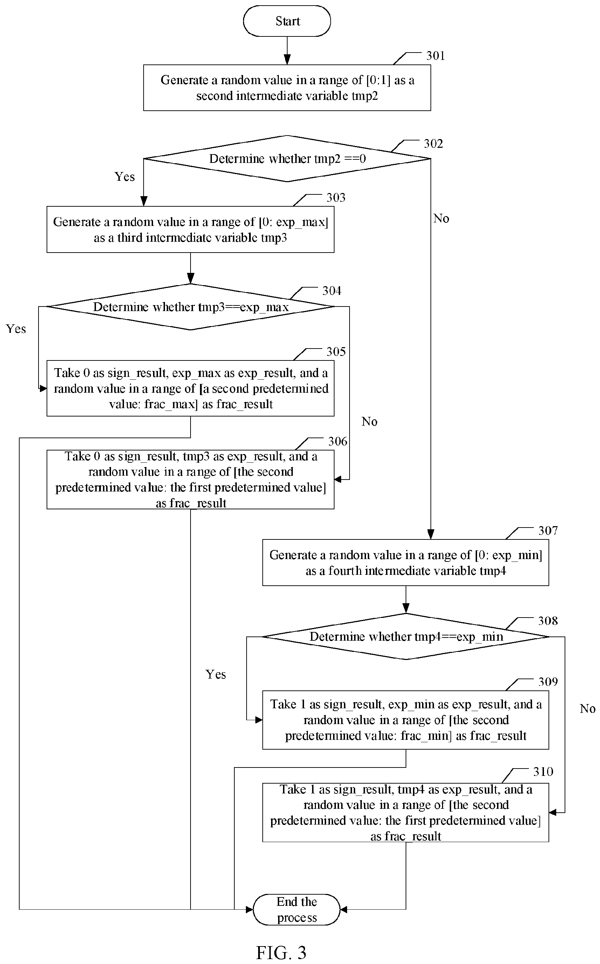

Based on the above introduction, FIG. 3 is a flowchart of a process of generating the first sign, the first exponent, and the first fraction in a second generation manner according to the present disclosure. As shown in FIG. 3, the following specific implementation steps may be included.

In step 301, a random value in a range of [0:1] is generated as a second intermediate variable tmp2.

When sign_max==0 and sign_min==1, indicating that the first parameter has a positive sign and the second parameter has a negative sign, firstly, the random value in the range of [0:1] may be generated as a second intermediate variable tmp2 by using the randomization method provided by the system verilog platform. That is, tmp2 = random([0 : 1]).

In step 302, it is determined whether tmp2 ==0, if yes, step 303 is performed, and otherwise, step 307 is performed.

In step 303, a random value in a range of [0: exp_max] is generated as a third intermediate variable tmp3.

That is, tmp3 = random([0 : exp_max]).

The random value in the range of [0 : exp_max] may be generated by using the randomization method provided by the system verilog platform.

In step 304, it is determined whether tmp3==exp_max, if yes, step 305 is performed, and otherwise, step 306 is performed.

In step 305, 0 is taken as sign_result, exp_max is taken as exp_result, a random value in a range of [a second predetermined value: frac_max] is taken as frac_result, and then the process is ended.

That is, sign_result=0;

exp _result=exp_max;
frac_result = random(['h0 : frac_max]).

The random value in the range of ['h0 : frac_max] may be generated by using the randomization method provided by the system verilog platform.

In step 306, 0 is taken as sign_result, tmp3 is taken as exp result, a random value in a range of [the second predetermined value: the first predetermined value] is taken as frac_result, and then the process is ended.

That is, sign_result=0;

exp_result= tmp3;
frac_result = random(['h0 : 'h7F_FFFF]).

The random value in the range of ['h0 : 'h7F_FFFF] may be generated by using the randomization method provided by the system verilog platform.

In step 307, a random value in a range of [0: exp_min] is generated as a fourth intermediate variable tmp4.

The random value in the range of [0 : exp_min] may be generated by using the randomization method provided by the system verilog platform. That is, exp_tmp = random([0 : exp_min]).

In step 308, it is determined whether tmp4==exp_min, if yes, step 309 is performed, and otherwise, step 310 is performed.

In step 309, 1 is taken as sign_result, exp_min is taken as exp_result, a random value in a range of [the second predetermined value: frac_min] is taken as frac_result, and then the process is ended.

That is, sign_result=1;

exp_result=exp_min;
frac_result = random(['h0 : frac_min]).

The random value in the range of ['h0 : frac_min] may be generated by using the randomization method provided by the system verilog platform.

In step 310, 1 is taken as sign_result, tmp4 is taken as exp_result, a random value in a range of [the second predetermined value: the first predetermined value] is taken as frac_result, and then the process is ended.

That is, sign_result=1;

exp_result= tmp4;
frac_result = random(['h0 : 'h7F _FFFF]).

The random value in the range of ['h0 : 'h7F _FFFF] may be generated by using the randomization method provided by the system verilog platform.

After the first sign, the first exponent, and the first fraction are acquired, a required floating-point number may be generated according to such information. That is, a randomized floating-point number that meets a constraint condition may be generated according to the acquired sign_result, exp_result, and frac_result.

3) Third generation manner

In one embodiment of the present disclosure, the generating, by the first generation module, the first sign, the first exponent, and the first fraction in a third generation manner may include: taking 1 as the first sign, the second exponent or the third exponent as the first exponent, and a random value in a range of [the second fraction: the third fraction] as the first fraction if the second exponent is equal to the third exponent and the second fraction is less than or equal to the third fraction.

In addition, in one embodiment of the present disclosure, the generating, by the first generation module, the first sign, the first exponent, and the first fraction in a third generation manner may further include: generating a random value in a range of [the second exponent: the third exponent] as a fifth intermediate variable if the second exponent is greater than the third exponent; taking 1 as the first sign, the third exponent as the first exponent, and a random value in a range of [a second predetermined value: the third fraction] as the first fraction if the fifth intermediate variable is equal to the third exponent; taking 1 as the first sign, the second exponent as the first exponent, and a random value in a range of [the second fraction: a first predetermined value] as the first fraction if the fifth intermediate variable is equal to the second exponent; and taking 1 as the first sign, the fifth intermediate variable as the first exponent, and a random value in a range of [the second predetermined value: the first predetermined value] as the first fraction if the fifth intermediate variable is equal to neither the third exponent nor the second exponent.

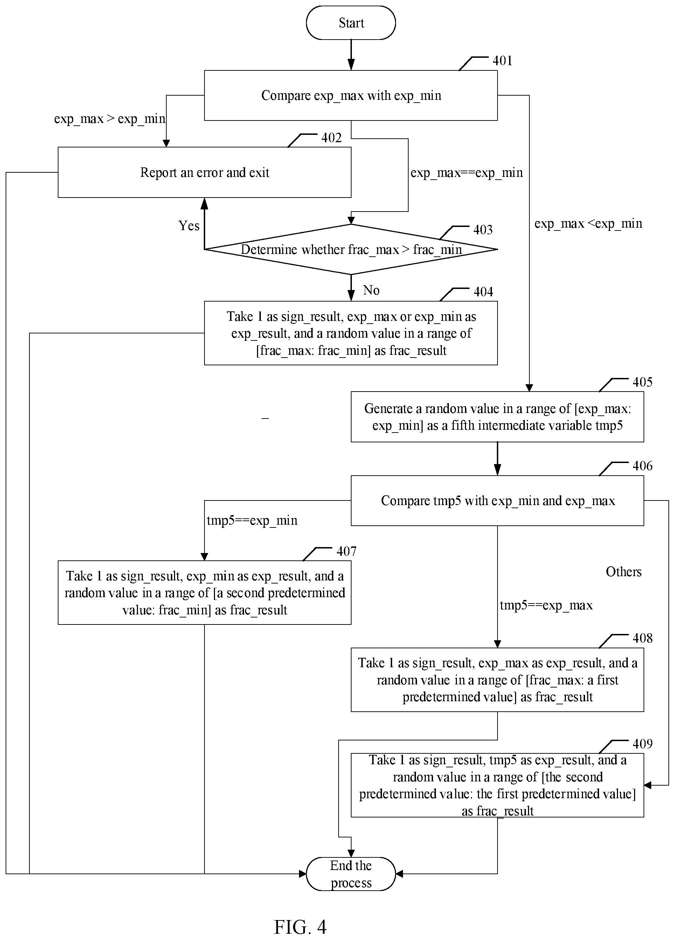

Based on the above introduction, FIG. 4 is a flowchart of a process of generating the first sign, the first exponent, and the first fraction in a third generation manner according to the present disclosure. As shown in FIG. 4, the following specific implementation steps may be included.

In step 401, exp_max is compared with exp_min, if exp max > exp_min, step 402 is performed, if exp_max==exp_min, step 403 is performed, and if exp_max <exp_min, step 405 is performed.

In step 402, report an error and exit, and then end the process.

When sign_max==1 and sign_min==1, indicating that both the first parameter and the second parameter have a negative sign, if exp_max >exp_min, indicating that the exponent of the first parameter is greater than that of the second parameter, a floating-point number that meets the constraint condition cannot be obtained in this case. Accordingly, report an error and exit.

In step 403, it is determined whether frac_max >frac_min, if yes, step 402 is performed, and otherwise, step 404 is performed.

When sign_max==1, sign_min==1, and exp_max==exp_min, if frac_max > frac_min, indicating that both the first parameter and the second parameter have a negative sign and the exponent of the first parameter is equal to that of the second parameter, but the fraction of the first parameter is greater than that of the second parameter, a floating-point number that meets the constraint condition cannot be obtained in this case. Accordingly, report an error and exit.

In step 404, 1 is taken as sign result, exp_max or exp_min is taken as exp result, a random value in a range of [frac_max: frac_min] is taken as frac result, and then the process is ended.

That is, sign_result=1;

> exp_result=exp_max or exp_min;
> frac_result = random([frac_max: frac min]).

The random value in the range of [frac_max: frac_min] may be generated by using the randomization method provided by the system verilog platform.

In step 405, a random value in a range of [exp_max: exp_min] is generated as a fifth intermediate variable tmp5.

The random value in the range of [exp_max: exp_min] may be generated as the fifth intermediate variable tmp5 by using the randomization method provided by the system verilog platform. That is, tmp5= random([exp_max: exp_min]).

In step 406, tmp5 is compared with exp_min and exp_max, if tmp5==exp_min, step 407 is performed, if tmp5==exp_max, step 408 is performed, and otherwise, step 409 is performed.

In step 407, 1 is taken as sign_result, exp_min is taken as exp_result, a random value in a range of [a second predetermined value: frac_min] is taken as frac_result, and then the process is ended.

That is, sign_result=1;

> exp _result=exp_min;
> frac_result = random(['h0: frac_min]).

The random value in the range of ['h0: frac_min] may be generated by using the randomization method provided by the system verilog platform.

In step 408, 1 is taken as sign_result, exp_max is taken as exp_result, a random value in a range of [frac_max: a first predetermined value] is taken as frac_result, and then the process is ended.

That is, sign_result=1;

> exp_result=exp_max;
> frac_result = random([frac_max: 'h7F _FFFF]).

The random value in the range of [frac_max: 'h7F_FFFF] may be generated by using the randomization method provided by the system verilog platform.

In step 409, 1 is taken as sign_result, tmp5 is taken as exp_result, a random value in a range of [the second predetermined value: the first predetermined value] is taken as frac_result, and then the process is ended.

That is, sign_result=1;

> exp_result=tmp5;
> frac_result = random(['h0 : 'h7F_FFFF]).

The random value in the range of ['h0 : 'h7F_FFFF] may be generated as frac_result by using the randomization method provided by the system verilog platform.

After the first sign, the first exponent, and the first fraction are acquired, a required floating-point number may be generated according to such information. That is, a randomized floating-point number that meets a constraint condition may be generated according to the acquired sign_result, exp_result, and frac_result.

In either manner, randomization of floating-point data can be realized, thereby providing required floating-point data excitation for the verification of relevant operation units in IC chip verification and improving a verification effect.

In the solutions of the present disclosure, in addition to the floating-point number, a floating-point number vector can also be generated. Accordingly, the floating-point number vector can also be used for IC chip verification. In one embodiment of the present disclosure, a randomized floating-point number vector of a specified length may be generated according to the floating-point number, thereby enriching generated floating-point data types and further improving the verification effect.

The user may set a length of a floating-point number vector generated by constrained randomization, and additionally, may also specify a type of a linear operation for randomization constraint. The linear operation has to be an operation on an array element supported by the system verilog platform. Moreover, after the linear operation on a data unit in the floating-point number vector, an operation result is required to be within a specified data range. That is, the operation result is required to be between an upper limit and a lower limit that are specified. A floating-point number vector that meets a constraint condition is finally returned. The number of the data unit is len, where len represents the specified length.

Firstly, a randomized floating-point number may be generated in the manner according to the present disclosure, in which a sign, an exponent, and a fraction are referred to as a first sign, a first exponent, and a first fraction respectively. Then, a randomized floating-point number vector may be generated according to the floating-point number.

In one embodiment of the present disclosure, the randomized floating-point number vector may be generated according to the floating-point number in the following manner: acquiring a product of the floating-point number with a predetermined first factor to obtain a sixth intermediate variable if the first exponent is equal to 0; acquiring a first array of randomized integer data, a length of the first array being equal to the specified length, and a result obtained after a predetermined linear operation on the first array being the sixth intermediate variable; and evenly distributing the first factor among elements in the first array, and determining the floating-point number vector in combination with a type of the linear operation.

In one embodiment of the present disclosure, the elements in the first array may be divided by the first factor to obtain the floating-point number vector if the linear operation is an addition operation. M elements may be randomly selected from the first array, the selected elements may be divided by 2, the M elements divided by 2 are used to form a second array, and elements in the second array may be divided by $2^N$ to obtain the floating-point number vector if the linear operation is a multiplication operation, wherein N is a quotient obtained by dividing a third predetermined value by the specified length, and M is a remainder obtained by dividing the third predetermined value by the specified length.

In one embodiment of the present disclosure, the first factor may be $2^{149}$, and the third predetermined value may be 149.

That is, the first factor is factor 1= (2 ^ 126) * (2 ^ 23)=2^149;

$$tmp6 = F\_tmp * factor1;$$

where F_tmp denotes the floating-point number, and tmp6 denotes the sixth intermediate variable.

Then, -(2^23) < tmp6 < (2^23), and data fractions of tmp6 are all 0.

Then, a first array Int_V of a piece of integer data may be obtained by system verilog array randomization, so that randomize(Int_V) with {Length(Int_V) == len; F(Int_V) == tmp6}, that is, a length of the first array is equal to the specified length len, and a result after a predetermined linear operation F() on the first array is the sixth intermediate variable tmp6.

Further, according to a specific operation process of the linear operation, factor1 may be evenly distributed among the elements in the first array. The elements in the first array may be divided by factor1 to obtain the required floating-point number vector if the linear operation is an addition operation. M elements may be randomly selected from the first array, the selected elements may be divided by 2, the M elements divided by 2 are used to form a second array, and elements in the second array may be divided by $2^N$ to obtain the required floating-point number vector if the linear operation is a multiplication operation.

The linear operation is generally an addition operation or a multiplication operation. The multiplication operation generally refers to scalar multiplication.

When the linear operation is the addition operation,

$$F\_V = Int\_V/factor1;$$

where F_V denotes the obtained floating-point number vector.

When the linear operation is the multiplication operation, firstly, 149 may be divided by len to obtain a quotient N and a remainder M, that is, 149 = (len * N) + M. Then, with the randomization method provided by the system verilog platform, M elements may be randomly selected from the first array, and each element is divided by 2, so as to obtain a second array F_V_pre. After that, each element in F_V_pre is divided by 2^N, so as to obtain the required floating-point number vector, that is, F_V = F_V_pre/2^N.

In one embodiment of the present disclosure, the randomized floating-point number vector may also be generated according to the floating-point number in the following manner: determining a second factor according to the first exponent, and acquiring a product of the floating-point number with the second factor to obtain a seventh intermediate variable if the first exponent is not equal to 0; acquiring a third array of the randomized integer data, a length of the third array being equal to the specified length, and a result obtained after a predetermined linear operation on the third array being the seventh intermediate variable; and evenly distributing the second factor among elements in the third array, and determining the floating-point number vector in combination with a type of the linear operation.

In one embodiment of the present disclosure, the elements in the third array may be divided by the second factor to obtain the floating-point number vector if the linear operation is an addition operation. M' elements may be randomly selected from the third array, the selected elements may be divided by 2, the M' elements divided by 2 are used to form a fourth array, and elements in the fourth array may be divided by $2^{N'}$ to obtain the floating-point number vector if the linear operation is a multiplication operation; wherein N' is a quotient obtained by dividing a fourth predetermined value by the specified length, and M' is a remainder obtained by dividing the fourth predetermined value by the specified length.

In one embodiment of the present disclosure, the second factor may be $2^P$, where P is the fourth predetermined value and a difference between 149 and the first exponent.

That is, the second factor is factor 2= (2 ^ (127 - exp_tmp)) * (2 ^ 23)=2^(149 - exp_tmp);

$$tmp 7 = F\_tmp * factor2;$$

where F_tmp denotes the floating-point number, and tmp7 denotes the seventh intermediate variable.

Then, $-(2^{24}) < Int\_tmp < (2^{24})$, and data fractions of tmp7 are all 0.

Then, a third array Int_V of a piece of integer data may be obtained by system verilog array randomization, so that randomize(Int_V) with {Length(Int_V') == len; F(Int_V') == tmp7}, that is, a length of the third array is equal to the specified length len, and a result after a predetermined linear operation F() on the third array is the seventh intermediate variable tmp7.

Further, according to a specific operation process of the linear operation, factor2 may be evenly distributed among the elements in the third array. The elements in the third array may be divided by factor2 to obtain the required floating-point number vector if the linear operation is an addition operation. M' elements may be randomly selected from the third array, the selected elements may be divided by 2, the M' elements divided by 2 are used to form a fourth array, and elements in the fourth array may be divided by $2^{N'}$ to obtain the required floating-point number vector if the linear operation is a multiplication operation.

When the linear operation is the addition operation,

$$F\_V = Int\_V'/factor2;$$

where F_V denotes the obtained floating-point number vector.

When the linear operation is the multiplication operation, firstly, (149-first exponent) may be divided by len to obtain a quotient N' and a remainder M', that is, (149-first exponent) = (len * N') + M'. Then, with the randomization method provided by the system verilog platform, M' elements may be randomly selected from the third array, and each element is divided by 2, so as to obtain a fourth array F_V_pre'. After that, each element in F_V_pre' is divided by $2^{N'}$, so as to obtain the required floating-point number vector, that is, F_V = F_V_pre'/$2^{N'}$.

It is to be noted that, to make the description brief, the foregoing method embodiments are expressed as a series of actions. However, those skilled in the art should appreciate that the present disclosure is not limited to the described action sequence, because according to the present disclosure, some steps may be performed in other sequences or performed simultaneously. Next, those skilled in the art should also appreciate that all the embodiments described in the specification are preferred embodiments, and the related actions and modules are not necessarily mandatory to the present disclosure. In addition, for a part that is not described in detail in one embodiment, refer to related descriptions in other embodiments.

In brief, by use of the solution in the method embodiment of the present disclosure, a floating-point number and a floating-point number vector randomized can be obtained, so as to make up for the deficiency that the current system Verilog platform provides randomization only for fixed-point data. Moreover, the user is only required to perform some simple settings, such as setting some constraint conditions, and other processing can be completed automatically, thereby simplifying user operations. In addition, the floating-point number and the floating-point number vector obtained can be used to verify the relevant operation units in IC chip verification, such as a floating-point operation unit and a floating-point vector operation unit, and a verification convergence process of the relevant operation units can be accelerated.

The above is the introduction to the method embodiments. The following is a further illustration of the solutions of the present disclosure through apparatus embodiments.

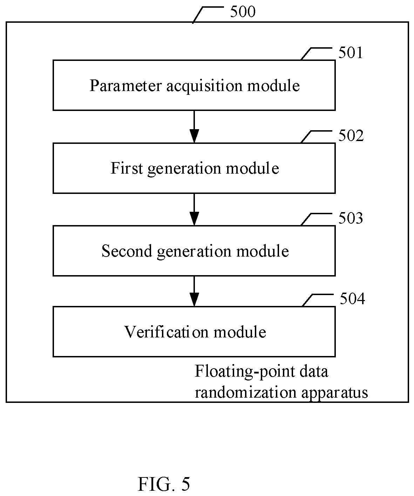

FIG. 5 is a schematic structural diagram of composition of a first embodiment 500 of an apparatus for IC chip verification according to the present disclosure, including a parameter acquisition module 501, a first generation module 502, a second generation module 503, and a verification module 504.

The parameter acquisition module 501 is configured to acquire a first parameter and a second parameter, the first parameter being an upper limit of a required floating-point number, and the second parameter being a lower limit of the required floating-point number.

The first generation module 502 is configured to generate a first sign, a first exponent, and a first fraction of a randomized floating-point number respectively according to the first parameter and the second parameter.

The second generation module 503 is configured to generate the floating-point number according to the first sign, the first exponent, and the first fraction.

The verification module 504 is configured to perform IC chip verification by using the floating-point number.

By use of the solution of the above apparatus embodiment, randomization of floating-point data can be realized, thereby providing required floating-point data excitation for the verification of relevant operation units in IC chip verification and improving a verification effect.

The floating-point data may include a floating-point number and a floating-point number vector. The floating-point number may consist of a sign, an exponent, and a fraction.

In one embodiment of the present disclosure, the first generation module 502 may acquire a second sign, a second exponent, and a second fraction of the first parameter respectively, acquire a third sign, a third exponent, and a third fraction of the second parameter respectively, and then generate the first sign, the first exponent, and the first fraction of the floating-point number according to the second sign, the second exponent, the second fraction, the third sign, the third exponent, and the third fraction acquired.

In one embodiment of the present disclosure, the first generation module 502 may generate the first sign, the first exponent, and the first fraction in a first generation manner if the second sign and the third sign are equal to 0, generate the first sign, the first exponent, and the first fraction in a second generation manner if the second sign is equal to 0 and the third sign are equal to 1, and generate the first sign, the first exponent, and the first fraction in a third generation manner if the second sign is equal to 1 and the third sign are equal to 1.

In one embodiment of the present disclosure, the generating, by the first generation module 502, the first sign, the first exponent, and the first fraction in a first generation manner may include: taking 0 as the first sign, the second exponent or the third exponent as the first exponent, and a random value in a range of [the third fraction: the second fraction] as the first fraction if the second exponent is equal to the third exponent and the second fraction is greater than or equal to the third fraction.

In one embodiment of the present disclosure, the generating, by the first generation module 502, the first sign, the first exponent, and the first fraction in a first generation manner may further include: generating a random value in a range of [the third exponent: the second exponent] as a first intermediate variable if the second exponent is greater than the third exponent; taking 0 as the first sign, the third exponent as the first exponent, and a random value in a range of [the third fraction: a first predetermined value] as the first fraction if the first intermediate variable is equal to the third exponent; taking 0 as the first sign, the second exponent as the first exponent, and a random value in a range of [a second predetermined value: the second fraction] as the first fraction if the first intermediate variable is equal to the second exponent; and taking 0 as the first sign, the first intermediate variable as the first exponent, and a random value in a range of [the second predetermined value: the first predetermined value] as the first fraction if the first intermediate variable is equal to neither the third exponent nor the second exponent.

In one embodiment of the present disclosure, the generating, by the first generation module 502, the first sign, the first exponent, and the first fraction in a second generation manner may include: generating a random value in a range of [0:1] as a second intermediate variable; generating a random value in a range of [0: the second exponent] as a third intermediate variable if the second intermediate variable is equal to 0; taking 0 as the first sign, the second exponent as the first exponent, and a random value in a range of [a second predetermined value: the second fraction] as the first fraction if the third intermediate variable is equal to the second exponent; and taking 0 as the first sign, the third intermediate variable as the first exponent, and a random value in a range of [the second predetermined value: a first predetermined value] as the first fraction if the third intermediate variable is not equal to the second exponent.

In one embodiment of the present disclosure, the generating, by the first generation module 502, the first sign, the first exponent, and the first fraction in a second generation manner may further include: generating a random value in a range of [0: the third exponent] as a fourth intermediate variable if the second intermediate variable is not equal to 0; taking 1 as the first sign, the third exponent as the first exponent, and a random value in a range of [a second predetermined value: the third fraction] as the first fraction if the fourth intermediate variable is equal to the third exponent; and taking 1 as the first sign, the fourth intermediate variable as the first exponent, and a random value in a range of [the second predetermined value: the first predetermined value] as the first fraction if the fourth intermediate variable is not equal to the third exponent.

In one embodiment of the present disclosure, the generating, by the first generation module 502, the first sign, the first exponent, and the first fraction in a third generation manner may include: taking 1 as the first sign, the second exponent or the third exponent as the first exponent, and a random value in a range of [the second fraction: the third fraction] as the first fraction if the second exponent is equal to the third exponent and the second fraction is less than or equal to the third fraction.

In one embodiment of the present disclosure, the generating, by the first generation module 502, the first sign, the first exponent, and the first fraction in a third generation manner may further include: generating a random value in a range of [the second exponent: the third exponent] as a fifth intermediate variable if the second exponent is greater than the third exponent; taking 1 as the first sign, the third exponent as the first exponent, and a random value in a range of [a second predetermined value: the third fraction] as the first fraction if the fifth intermediate variable is equal to the third exponent; taking 1 as the first sign, the second exponent as the first exponent, and a random value in a range of [the second fraction: a first predetermined value] as the first fraction if the fifth intermediate variable is equal to the second exponent; and taking 1 as the first sign, the fifth intermediate variable as the first exponent, and a random value in a range of [the second predetermined value: the first predetermined value] as the first fraction if the fifth intermediate variable is equal to neither the third exponent nor the second exponent.

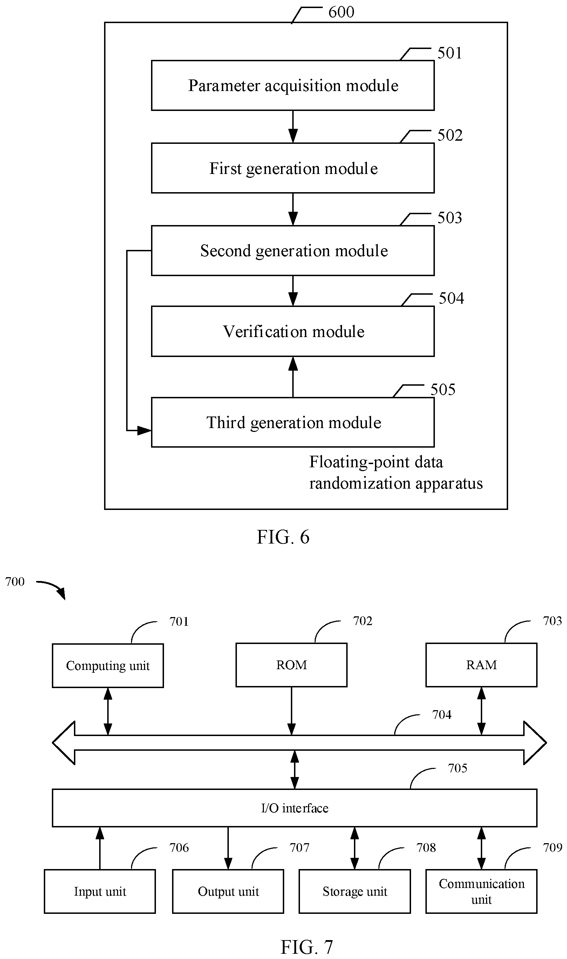

FIG. 6 is a schematic structural diagram of composition of a second embodiment 600 of the apparatus for IC chip verification according to the present disclosure. As shown in FIG. 6, the apparatus includes: a parameter acquisition module 501, a first generation module 502, a second generation module 503, a verification module 504, and a third generation module 505.

The parameter acquisition module 501, the first generation module 502, and the second generation module 503 are the same as those in the embodiment shown in FIG. 5, and are not described in detail.

The third generation module 505 is configured to generate a randomized floating-point number vector of a specified length according to the floating-point number. Correspondingly, the verification module 504 may be further configured to perform IC chip verification by using the floating-point number vector.

In one embodiment of the present disclosure, the third generation module 505 may acquire a product of the floating-point number with a predetermined first factor to obtain a sixth intermediate variable if the first exponent is equal to 0; acquire a first array of randomized integer data, a length of the first array being equal to the specified length, and a result obtained after a predetermined linear operation on the first array being the sixth intermediate variable; and evenly distribute the first factor among elements in the first array, and determine the floating-point number vector in combination with a type of the linear operation.

In one embodiment of the present disclosure, the third generation module 505 may divide the elements in the first array by the first factor to obtain the floating-point number vector if the linear operation is an addition operation; and randomly select M elements from the first array, divide the selected elements by 2, use the M elements divided by 2 to form a second array, and divide elements in the second array by $2^N$ to obtain the floating-point number vector if the linear operation is a multiplication operation; wherein N is a quotient obtained by dividing a third predetermined value by the specified length, and M is a remainder obtained by dividing the third predetermined value by the specified length.

In one embodiment of the present disclosure, the first factor may be $2^{149}$, and the third predetermined value may be 149.

In one embodiment of the present disclosure, the third generation module 505 may determine a second factor according to the first exponent, and acquire a product of the floating-point number with the second factor to obtain a seventh intermediate variable if the first exponent is not equal to 0; acquire a third array of the randomized integer data, a length of the third array being equal to the specified length, and a result obtained after a predetermined linear operation on the third array being the seventh intermediate variable; and evenly distribute the second factor among elements in the third array, and determine the floating-point number vector in combination with a type of the linear operation.

In one embodiment of the present disclosure, the third generation module 505 may divide the elements in the third array by the second factor to obtain the floating-point number vector if the linear operation is an addition operation; and randomly select M' elements from the third array, divide the selected elements by 2, use the M' elements divided by 2 to form a fourth array, and divide elements in the fourth array by $2^{N'}$ to obtain the floating-point number vector if the linear operation is a multiplication operation; wherein N' is a quotient obtained by dividing a fourth predetermined value by the specified length, and M' is a remainder obtained by dividing the fourth predetermined value by the specified length.

In one embodiment of the present disclosure, the second factor may be $2^P$, where P is the fourth predetermined value and a difference between 149 and the first exponent.

Specific operation flows of the apparatus embodiments shown in FIG. 5 and FIG. 6 may be obtained with reference to the related description in the above method embodiments.

In brief, by use of the solution in the apparatus embodiment of the present disclosure, a floating-point number and a floating-point number vector randomized can be obtained, so as to make up for the deficiency that the current system Verilog platform provides randomization only for fixed-point data. Moreover, the user is only required to perform some simple settings, such as setting some constraint conditions, and other processing can be completed automatically, thereby simplifying user operations. In addition, the floating-point number and the floating-point number vector obtained can be used to verify the relevant operation units in IC chip verification, such as a floating-point operation unit and a floating-point vector operation unit, and a verification convergence process of the relevant operation units can be accelerated.

The solutions of the present disclosure may be applied to the field of artificial intelligence, and in particular, to fields such as artificial intelligence chips and cloud computing. Artificial intelligence is a discipline that studies how to make computers simulate certain thinking processes and intelligent behaviors (such as learning, reasoning, thinking and planning) of human beings, which includes hardware technologies and software technologies. The artificial intelligence hardware technologies generally include sensors, dedicated artificial intelligence chips, cloud computing, distributed storage, big data processing and other technologies. The artificial intelligence software technologies mainly include a computer vision technology, a speech recognition technology, a natural language processing technology, machine learning/deep learning, a big data processing technology, a knowledge graph technology and other major directions.

In addition, acquisition, storage, use, processing, transmission, provision, and disclosure of users' personal information involved in the technical solutions of the present disclosure comply with relevant laws and regulations, and do not violate public order and moral.

According to embodiments of the present disclosure, the present disclosure further provides an electronic device, a readable storage medium, and a computer program product.

FIG. 7 is a schematic block diagram of an electronic device 700 that may be configured to implement an embodiment of the present disclosure. The electronic device is intended to represent various forms of digital computers, such as laptops, desktops, workbenches, servers, blade servers, mainframe computers, and other suitable computing devices. The electronic device may further represent various forms of mobile devices, such as personal digital assistants, cellular phones, smart phones, wearable devices, and other similar computing devices. The components, their connections and relationships, and their functions shown herein are examples only, and are not intended to limit the implementation of the present disclosure as described and/or required herein.

As shown in FIG. 7, the device 700 includes a computing unit 701, which may perform various suitable actions and processing according to a computer program stored in a read-only memory (ROM) 702 or a computer program loaded from a storage unit 708 into a random access memory (RAM) 703. The RAM 703 may also store various programs and data required to operate the device 700. The computing unit 701, the ROM 702 and the RAM 703 are connected to one another by a bus 704. An input/output (I/O) interface 705 is also connected to the bus 704.

A plurality of components in the device 700 are connected to the I/O interface 705, including an input unit 706, such as a keyboard and a mouse; an output unit 707, such as various displays and speakers; a storage unit 708, such as disks and discs; and a communication unit 709, such as a network card, a modem and a wireless communication transceiver. The communication unit 709 allows the device 700 to exchange information/data with other devices over computer networks such as the Internet and/or various telecommunications networks.

The computing unit 701 may be a variety of general-purpose and/or special-purpose processing components with processing and computing capabilities. Some examples of the computing unit 701 include, but are not limited to, a central processing unit (CPU), a graphics processing unit (GPU), various artificial intelligence (AI) computing chips, various computing units that run machine learning model algorithms, a digital signal processor (DSP), and any appropriate processor, controller or microcontroller, etc. The computing unit 701 performs the methods and processing described above, such as the method described in the present disclosure. For example, in some embodiments, the method described in the present disclosure may be implemented as a computer software program that is tangibly embodied in a machine-readable medium, such as the storage unit 708. In some embodiments, part or all of a computer program may be loaded and/or installed on the device 700 via the ROM 702 and/or the communication unit 709. One or more steps of the method described in the present disclosure may be performed when the computer program is loaded into the RAM 703 and executed by the computing unit 701. Alternatively, in other embodiments, the computing unit 701 may be configured to perform the method described in the present disclosure by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a load programmable logic device (CPLD), computer hardware, firmware, software, and/or combinations thereof. Such implementations may include implementation in one or more computer programs that are executable and/or interpretable on a programmable system including at least one programmable processor, which can be special or general purpose, configured to receive data and instructions from a storage system, at least one input apparatus, and at least one output apparatus, and to transmit data and instructions to the storage system, the at least one input apparatus, and the at least one output apparatus.

Program codes configured to implement the methods in the present disclosure may be written in any combination of one or more programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a standalone package, or entirely on a remote machine or a server.

In the context of the present disclosure, machine-readable media may be tangible media which may include or store programs for use by or in conjunction with an instruction execution system, apparatus or device. The machine-readable media may be machine-readable signal media or machine-readable storage media. The machine-readable media may include, but are not limited to, electronic, magnetic, optical, electromagnetic, infrared, or semiconductor systems, apparatuses or devices, or any suitable combinations thereof. More specific examples of machine-readable storage media may include electrical connections based on one or more wires, a portable computer disk, a hard disk, a RAM, a ROM, an erasable programmable read-only memory (EPROM or flash memory), an optical fiber, a compact disk read-only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, speech input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN), and the Internet.

The computer system may include a client and a server. The client and the server are generally far away from each other and generally interact via the communication network. A relationship between the client and the server is generated through computer programs that run on a corresponding computer and have a client-server relationship with each other. The server may be a cloud server, a distributed system server, or a server combined with blockchain.

It should be understood that the steps can be reordered, added, or deleted using the various forms of processes shown above. For example, the steps described in the present disclosure may be executed in parallel or sequentially or in different sequences, provided that desired results of the technical solutions disclosed in the present disclosure are achieved, which is not limited herein.

The above specific implementations do not limit the scope of protection of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the scope of protection of the present disclosure.

**Claims**

1. A method for integrated circuit (IC) chip verification, comprising:

   acquiring (101) a first parameter and a second parameter, the first parameter being an upper limit of a required floating-point number, and the second parameter being a lower limit of the required floating-point number;
   generating (102) a first sign, a first exponent, and a first fraction of a randomized floating-point number respectively according to the first parameter and the second parameter;
generating (103) the floating-point number according to the first sign, the first exponent, and the first fraction; and
performing (104) IC chip verification by using the floating-point number.

2. The method of claim 1, wherein the generating a first sign, a first exponent, and a first fraction of a randomized floating-point number respectively according to the first parameter and the second parameter comprises:

   acquiring a second sign, a second exponent, and a second fraction of the first parameter respectively, and acquiring a third sign, a third exponent, and a third fraction of the second parameter respectively; and
   generating the first sign, the first exponent, and the first fraction of the floating-point number according to the second sign, the second exponent, the second fraction, the third sign, the third exponent, and the third fraction acquired.

3. The method of claim 2, wherein the generating the first sign, the first exponent, and the first fraction of the floating-point number comprises:

   generating the first sign, the first exponent, and the first fraction in a first generation manner if the second sign and the third sign are equal to 0;
   generating the first sign, the first exponent, and the first fraction in a second generation manner if the second sign is equal to 0 and the third sign are equal to 1; and
   generating the first sign, the first exponent, and the first fraction in a third generation manner if the second sign is equal to 1 and the third sign are equal to 1.

4. The method of claim 3, wherein the generating the first sign, the first exponent, and the first fraction in a first generation manner comprises:

   taking 0 as the first sign, the second exponent or the third exponent as the first exponent, and a random value in a range of [the third fraction: the second fraction] as the first fraction if the second exponent is equal to the third exponent and the second fraction is greater than or equal to the third fraction, preferably
   wherein the generating the first sign, the first exponent, and the first fraction in a first generation manner further comprises:

      generating a random value in a range of [the third exponent: the second exponent] as a first intermediate variable if the second exponent is greater than the third exponent;
taking 0 as the first sign, the third exponent as the first exponent, and a random value in a range of [the third fraction: a first predetermined value] as the first fraction if the first intermediate variable is equal to the third exponent;

taking 0 as the first sign, the second exponent as the first exponent, and a random value in a range of [a second predetermined value: the second fraction] as the first fraction if the first intermediate variable is equal to the second exponent; and

taking 0 as the first sign, the first intermediate variable as the first exponent, and a random value in a range of [the second predetermined value: the first predetermined value] as the first fraction if the first intermediate variable is equal to neither the third exponent nor the second exponent.

5. The method of claim 3, wherein the generating the first sign, the first exponent, and the first fraction in a second generation manner comprises:

generating a random value in a range of [0:1] as a second intermediate variable;
generating a random value in a range of [0: the second exponent] as a third intermediate variable if the second intermediate variable is equal to 0;
taking 0 as the first sign, the second exponent as the first exponent, and a random value in a range of [a second predetermined value: the second fraction] as the first fraction if the third intermediate variable is equal to the second exponent; and
taking 0 as the first sign, the third intermediate variable as the first exponent, and a random value in a range of [the second predetermined value: a first predetermined value] as the first fraction if the third intermediate variable is not equal to the second exponent, preferably
wherein the generating the first sign, the first exponent, and the first fraction in a second generation manner further comprises:

generating a random value in a range of [0: the third exponent] as a fourth intermediate variable if the second intermediate variable is not equal to 0;
taking 1 as the first sign, the third exponent as the first exponent, and a random value in a range of [a second predetermined value: the third fraction] as the first fraction if the fourth intermediate variable is equal to the third exponent; and
taking 1 as the first sign, the fourth intermediate variable as the first exponent, and a random value in a range of [the second predetermined value: the first predetermined value] as the first fraction if the fourth intermediate variable is not equal to the third exponent.

6. The method of claim 3, wherein the generating the first sign, the first exponent, and the first fraction in a third generation manner comprises:

taking 1 as the first sign, the second exponent or the third exponent as the first exponent, and a random value in a range of [the second fraction: the third fraction] as the first fraction if the second exponent is equal to the third exponent and the second fraction is less than or equal to the third fraction, preferably
wherein the generating the first sign, the first exponent, and the first fraction in a third generation manner further comprises:

generating a random value in a range of [the second exponent: the third exponent] as a fifth intermediate variable if the second exponent is greater than the third exponent;
taking 1 as the first sign, the third exponent as the first exponent, and a random value in a range of [a second predetermined value: the third fraction] as the first fraction if the fifth intermediate variable is equal to the third exponent;
taking 1 as the first sign, the second exponent as the first exponent, and a random value in a range of [the second fraction: a first predetermined value] as the first fraction if the fifth intermediate variable is equal to the second exponent; and
taking 1 as the first sign, the fifth intermediate variable as the first exponent, and a random value in a range of [the second predetermined value: the first predetermined value] as the first fraction if the fifth intermediate variable is equal to neither the third exponent nor the second exponent.

7. The method of any one of claims 1 to 6, further comprising: generating a randomized floating-point number vector of a specified length according to the floating-point number, and performing IC chip verification by using the floating-point number vector.

8. The method of claim 7, wherein the generating a randomized floating-point number vector of a specified length according to the floating-point number comprises:

acquiring a product of the floating-point number with a predetermined first factor to obtain a sixth intermediate variable if the first exponent is equal to 0;

acquiring a first array of randomized integer data, a length of the first array being equal to the specified length, and a result obtained after a predetermined linear operation on the first array being the sixth intermediate variable; and

evenly distributing the first factor among elements in the first array, and determining the floating-point number vector in combination with a type of the linear operation.

9. The method of claim 8, wherein the determining the floating-point number vector in combination with a type of the linear operation comprises:

dividing the elements in the first array by the first factor to obtain the floating-point number vector if the linear operation is an addition operation; and

randomly selecting M elements from the first array, dividing the selected elements by 2, using the M elements divided by 2 to form a second array, and dividing elements in the second array by $2^N$ to obtain the floating-point number vector if the linear operation is a multiplication operation;

wherein N is a quotient obtained by dividing a third predetermined value by the specified length, and M is a remainder obtained by dividing the third predetermined value by the specified length, preferably

wherein the first factor is $2^{149}$; and

the third predetermined value is 149.

10. The method of claim 8, wherein the generating a randomized floating-point number vector of a specified length according to the floating-point number further comprises:

determining a second factor according to the first exponent, and acquiring a product of the floating-point number with the second factor to obtain a seventh intermediate variable if the first exponent is not equal to 0;

acquiring a third array of the randomized integer data, a length of the third array being equal to the specified length, and a result obtained after a predetermined linear operation on the third array being the seventh intermediate variable; and

evenly distributing the second factor among elements in the third array, and determining the floating-point number vector in combination with a type of the linear operation.

11. The method of claim 10, wherein the determining the floating-point number vector in combination with a type of the linear operation comprises:

dividing the elements in the third array by the second factor to obtain the floating-point number vector if the linear operation is an addition operation; and

randomly selecting M' elements from the third array, dividing the selected elements by 2, using the M' elements divided by 2 to form a fourth array, and dividing elements in the fourth array by $2^{N'}$ to obtain the floating-point number vector if the linear operation is a multiplication operation;

wherein N' is a quotient obtained by dividing a fourth predetermined value by the specified length, and M' is a remainder obtained by dividing the fourth predetermined value by the specified length, preferably

wherein the second factor is $2^P$, P being the fourth predetermined value and a difference between 149 and the first exponent.

12. An apparatus (500) for IC chip verification, comprising: a parameter acquisition module (501), a first generation module (502), a second generation module (503), and a verification module (504);

the parameter acquisition module (501) being configured to acquire a first parameter and a second parameter, the first parameter being an upper limit of a required floating-point number, and the second parameter being a lower limit of the required floating-point number;

the first generation module (502) being configured to generate a first sign, a first exponent, and a first fraction of a randomized floating-point number respectively according to the first parameter and the second parameter;

the second generation module (503) being configured to generate the floating-point number according to the first sign, the first exponent, and the first fraction; and

the verification module (504) being configured to perform IC chip verification by using the floating-point number.

13. An electronic device, comprising:

at least one processor; and

a memory in communication connection with the at least one processor; wherein

the memory stores instructions executable by the at least one processor which, when executed by the at least one processor, enable the at least one processor to perform the method of any one of claims 1 to 11.

14. A non-transitory computer-readable storage medium storing computer instructions which, when executed by a computer, cause the computer to perform the method of any one of claims 1 to 11.

15. A computer program product, comprising computer programs/instructions, wherein, when the computer programs/instructions are executed by a processor, the method of any one of claims 1 to 11 is performed.

Acquire a first parameter and a second parameter, the first parameter being an upper limit of a required floating-point number, and the second parameter being a lower limit of the required floating-point number — 101

Generate a first sign, a first exponent, and a first fraction of a randomized floating-point number respectively according to the first parameter and the second parameter — 102

Generate the floating-point number according to the first sign, the first exponent, and the first fraction — 103

Perform IC chip verification by using the floating-point number — 104

FIG. 1

Start

201
Compare exp_max with exp_min

exp_max < exp_min

202
Report an error and exit

exp_max==exp_min

exp_max >exp_min

Yes

203
Determine whether frac_max < frac_min

No

204
Take 0 as sign_result, exp_max or exp_min
as exp_result, and a random number in a range of
[frac_min: frac_max]
as frac_result

205
Generate a random value in a range of [exp_min:
exp_max] as a first intermediate variable tmp1

206
Compare tmp1 with exp_min and exp_max

tmp1==exp_min

Others

207
Take 0 as sign_result, exp_min as exp_result, and a
random number in a range of [frac_min: a first
predetermined value] as frac_result

tmp1==exp_max

208
Take 0 as sign_result, exp_max as exp_result, and a
random value in a range of [a second predetermined
value: frac_max] as frac_result

209
Take 0 as sign_result, tmp1 as exp_result, and a
random value in a range of [the second
predetermined value: the first predetermined value]
as frac_result

End the
process

FIG. 2

Start

301

Generate a random value in a range of [0:1] as a second intermediate variable tmp2

302

Determine whether tmp2 ==0

Yes

No

303

Generate a random value in a range of [0: exp_max] as a third intermediate variable tmp3

304

Determine whether tmp3==exp_max

Yes

No

305

Take 0 as sign_result, exp_max as exp_result, and a random value in a range of [a second predetermined value: frac_max] as frac_result

306

Take 0 as sign_result, tmp3 as exp_result, and a random value in a range of [the second predetermined value: the first predetermined value] as frac_result

307

Generate a random value in a range of [0: exp_min] as a fourth intermediate variable tmp4

308

Determine whether tmp4==exp_min

Yes

No

309

Take 1 as sign_result, exp_min as exp_result, and a random value in a range of [the second predetermined value: frac_min] as frac_result

310

Take 1 as sign_result, tmp4 as exp_result, and a random value in a range of [the second predetermined value: the first predetermined value] as frac_result

End the process

FIG. 3

Start

401
Compare exp_max with exp_min

exp_max > exp_min

402
Report an error and exit

exp_max==exp_min

exp_max <exp_min

403
Determine whether frac_max > frac_min

Yes

No

404
Take 1 as sign_result, exp_max or exp_min as exp_result, and a random value in a range of [frac_max: frac_min] as frac_result

405
Generate a random value in a range of [exp_max: exp_min] as a fifth intermediate variable tmp5

406
Compare tmp5 with exp_min and exp_max

tmp5==exp_min

Others

407
Take 1 as sign_result, exp_min as exp_result, and a random value in a range of [a second predetermined value: frac_min] as frac_result

tmp5==exp_max

408
Take 1 as sign_result, exp_max as exp_result, and a random value in a range of [frac_max: a first predetermined value] as frac_result

409
Take 1 as sign_result, tmp5 as exp_result, and a random value in a range of [the second predetermined value: the first predetermined value] as frac_result

End the process

FIG. 4

500

501

Parameter acquisition module

502

First generation module

503

Second generation module

504

Verification module

Floating-point data
randomization apparatus

FIG. 5

FIG. 6

FIG. 7

Europäisches
Patentamt
European
Patent Office
Office européen
des brevets

# EUROPEAN SEARCH REPORT

Application Number

EP 22 18 4596

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/203813 A1 (ZIV ABRAHAM [IL]) 9 August 2012 (2012-08-09) * paragraph [0014] - paragraph [0015] * * paragraph [0038] - paragraph [0041] * ----- | 1-15 | INV. G06F7/483 G06F30/398 |
| A | US 5 572 664 A (BUJANOS NORMAN [US]) 5 November 1996 (1996-11-05) * column 5, line 37 - column 9, line 20 * ----- | 1-15 | |
| A | CN 102 981 799 A (JIANGNAN INST COMPUTING TECH) 20 March 2013 (2013-03-20) * the whole document * ----- | 1-15 | |

TECHNICAL FIELDS
SEARCHED (IPC)

G06F

The present search report has been drawn up for all claims

| Place of search | Date of completion of the search | Examiner |
|---|---|---|
| Munich | 14 December 2022 | Tenbieg, Christoph |

EPO FORM 1503 03.82 (P04C01)

**ANNEX TO THE EUROPEAN SEARCH REPORT
ON EUROPEAN PATENT APPLICATION NO.**

EP 22 18 4596

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2022

| Patent document cited in search report | | Publication date | Patent family member(s) | | Publication date |
|---|---|---|---|---|---|
| US 2012203813 | A1 | 09-08-2012 | US | 2005240645 A1 | 27-10-2005 |
| | | | US | 2008307028 A1 | 11-12-2008 |
| | | | US | 2008307030 A1 | 11-12-2008 |
| | | | US | 2012203813 A1 | 09-08-2012 |
| US 5572664 | A | 05-11-1996 | EP | 0685794 A1 | 06-12-1995 |
| | | | JP | H0863367 A | 08-03-1996 |
| | | | US | 5572664 A | 05-11-1996 |
| CN 102981799 | A | 20-03-2013 | NONE | | |

EPO FORM P0459

For more details about this annex : see Official Journal of the European Patent Office, No. 12/82